# FASCICULE DE BREVET EUROPEEN

(11) **EP 3 759 651 B1**
(45) Date de publication et mention de la délivrance du brevet: **19.10.2022**
(21) Numéro de dépôt: 19711955.5
(22) Date de dépôt: 26.02.2019
(51) Int. Cl.: G06K 19/07, G06K 19/073, G06K 19/077

(54) **CARTE À PUCE SANS CONTACT À MODULES ÉLECTRONIQUES MULTIPLES COMMUNICANTS**
KONTAKTLOSE CHIPKARTE MIT MEHREREN ELEKTRONISCHEN KOMMUNIZIERENDEN MODULEN
CONTACTLESS SMART CARD WITH MULTIPLE ELECTRONIC COMMUNICATING MODULES

(30) Priorité: 28.02.2018 FR 1800173
(43) Date de publication de la demande: 06.01.2021
(73) Titulaire: Smart Packaging Solutions (S.P.S), 13790 Rousset (FR)
(72) Inventeur: MEAR, Benjamin, 13790 Rousset (FR); KAMBOURIAN, Haig, 13790 Rousset (FR); GERIN, Guillaume, 13790 Rousset (FR)
(74) Mandataire: Nicolle, Olivier
(86) Numéro de dépôt international: PCT/FR2019/000025
(87) Numéro de publication internationale: WO 2019/166706

(56) Documents cités:
- EP-A1- 1 387 323
- EP-A1- 2 098 981
- FR-A1- 2 727 227
- FR-A1- 2 883 653
- JP-A- S 629 487
- LAN LI ET AL: "A Fully-Integrated Flexible Photonic Platform for Chip-to-Chip Optical Interconnects", JOURNAL OF LIGHTWAVE TECHNOLOGY, vol. 31, no. 24, 15 décembre 2013 (2013-12-15), pages 4080-4086, XP055547381, USA ISSN: 0733-8724, DOI: 10.1109/JLT.2013.2285382

## Description

L'invention concerne les objets portables sécurisés et communicants tels que notamment les cartes ou documents d'identification à puce, pourvus d'un premier module microélectronique à fonctionnement sans contact ou à fonctionnement mixte à contact et sans contact, et d'un second module ou composant électronique tel qu'un capteur biométrique destiné à communiquer avec le premier module, ainsi qu'une antenne intégrée au corps de l'objet portable pour communiquer à distance avec un lecteur radiofréquence. A titre d'exemple et de simplification de l'exposé, l'invention sera décrite dans le cadre de son application aux cartes à puce, sans pour autant limiter la portée de l'invention à d'autres objets portables ou d'autres facteurs de forme.

Les cartes à puce à fonctionnement sans contact et réalisées au format ISO 7816-1 constituent l'exemple le plus répandu des cartes d'identification auxquelles s'applique l'invention.

### Etat de la technique

La plupart des cartes à puce sans contact ou des cartes duales à fonctionnement mixte à contact et sans contact connues comportent un corps de carte, un module électronique inséré dans une cavité du corps de carte et pourvu d'une puce microélectronique, et une antenne disposée dans le corps de carte et électriquement connectée à des plots de sortie de la puce microélectronique.

Alternativement, il existe des cartes à puce dont l'antenne du corps de carte est en couplage inductif avec le module électronique pourvu lui-même d'une antenne.

L'antenne du corps de carte est généralement constituée de spires réalisées à l'aide de pistes électriquement conductrices, réalisées sur un insert ou substrat flexible qui est intégré au corps de carte pendant l'assemblage de la carte.

Afin d'obtenir des performances de communication sans contact adéquates, et en particulier une portée de fonctionnement suffisante, les spires de l'antenne doivent être de grande taille, typiquement au format dit ID1, qui correspond aux mesures de 85,60 x 53,98 mm pour le corps de carte. Ce format est communément utilisé notamment pour les cartes bancaires.

Dans un certain nombre d'applications, il devient nécessaire d'intégrer à la carte à puce un ou plusieurs modules électroniques complémentaires par rapport au module principal, par exemple pour l'intégration de capteurs biométriques susceptibles de collecter des informations biométriques et de les transmettre au module principal à des fins d'identification biométrique de l'utilisateur de la carte à puce.

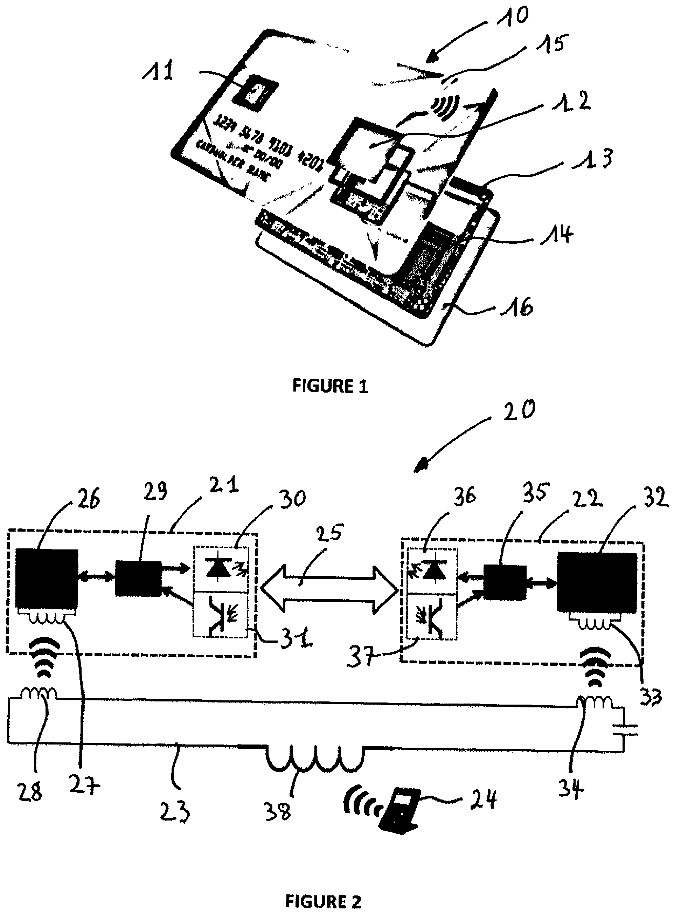

Dans ce cas, comme par exemple dans le cas de la carte représentée en figure 1, les capteurs et le module sont disposés sur un substrat de type PCB et interconnectés par des pistes physiques, filaires ou en couche mince métallique. Cet arrangement présente plusieurs inconvénients.

En effet, l'interconnexion de plusieurs modules disposés sur un substrat PCB est coûteux car il nécessite des composants supplémentaires et une modification des processus de fabrication classiques des cartes à puce. Elle est en outre peu fiable dans le temps car les flexions répétées que le produit devra subir au cours de son utilisation risquent de rompre plus ou moins rapidement les interconnexions électriques entre les modules.

On connaît aussi de par le document EP 2 098 981 A1 un objet portable comportant une première antenne inductive et une pluralité de puces comportant chacune un circuit intégré et une seconde antenne inductive pour l'alimentation et la communication dudit circuit intégré. Certaines des puces n'ont pas vocation à communiquer avec un lecteur externe, mais uniquement avec d'autres puces de l'objet portable. Ce document prévoit donc une architecture selon laquelle les puces peuvent communiquer entre elles de manière indépendante sans utiliser l'antenne prévue pour communiquer avec l'extérieur, mais par couplage inductif entre elles.

Le document FR 2 727 227 A1 décrit quant à lui un dispositif de sécurité actif à mémoire destiné à la protection d'informations secrètes contenues dans la mémoire. Afin d'éviter l'accès aux informations secrètes par des moyens d'exploration externes, ce dispositif prévoit que les informations sont réparties entre deux circuits, et la connexion entre les deux circuits se fait par divers moyens de communication, y compris une liaison optoélectronique, arrangée de telle manière que la moindre perturbation de la disposition relative des circuits entraine une rupture de la liaison.

### But de l'invention

Le but général de l'invention est par conséquent de proposer une nouvelle structure d'objet portable communicant, notamment de carte à puce ou équivalent dénuée des inconvénients ci-dessus, et en particulier une structure permettant de faire communiquer entre eux sans connexion électrique les différents modules électroniques et capteurs intégrés dans la carte à puce ou des documents de sécurité équivalents.

Un autre but de l'invention est de faire communiquer plusieurs modules au sein d'une même carte à puce ou équivalent, tout en utilisant un procédé de fabrication déjà existant et bien maitrisé, à savoir le report des modules électroniques dans des cavités aménagées dans le corps de carte, sans utiliser de PCB couvrant la surface de la carte.

### Résumé de l'invention

Selon le principe de l'invention, les différents modules sont alimentés électriquement à l'aide d'une antenne susceptible de recevoir l'énergie de l'antenne du lecteur de façon à être autonomes en énergie. En outre, pour communiquer entre eux, les différents modules électroniques sont connectés entre eux par une liaison optique qui est réalisée dans le corps de la carte.

L'ensemble permet donc de réaliser des cartes avec des fonctionnalités complexes, de manière sécurisée, puisque l'information circule dans l'épaisseur de l'objet, notamment dans la tranche de la carte à puce, mais ne débouche pas sur l'extérieur.

L'invention porte par conséquent sur un document d'identification à puce à fonctionnement sans contact ou à fonctionnement mixte à contact et sans contact, apte à communiquer par radiofréquence avec un lecteur externe, selon les revendications indépendantes 1 et 3.

Selon un mode de réalisation de l'invention, ladite interface optique comporte pour chaque module une photodiode et une LED d'émission, la photodiode d'une interface optique donnée étant optiquement couplée à la LED d'émission d'une autre interface optique.

Dans un mode de réalisation avantageux, l'objet portable communicant comporte deux modules électroniques qui sont disposés en regard l'un de l'autre de façon à présenter leurs interfaces optiques en face l'une de l'autre, et chaque module comporte une goutte d'enrobage transparente qui laisse passer l'onde optique, par exemple la lumière visible, entre les interfaces optiques des deux modules, pour au moins certaines longueurs d'onde.

Selon un autre mode de réalisation, l'objet comporte deux modules électroniques disposés en regard l'un de l'autre de façon à présenter leurs interfaces optiques en face l'une de l'autre, et un troisième module optiquement connecté à au moins l'un des autres modules par une couche optique transparente.

Selon un mode de réalisation avantageux de l'invention, au moins l'un des modules électroniques de l'objet comporte un capteur biométrique, par exemple un capteur d'empreintes digitales.

De préférence, chaque module électronique comporte une inductance propre apte à récupérer l'énergie du signal radiofréquence du lecteur. Ceci permet d'alimenter électriquement le module électronique directement par le lecteur, sans nécessiter de batterie à bord de l'objet portable communicant.

Afin d'assurer une portée de communication radiofréquence suffisante, chaque inductance propre de module est couplée électro magnétiquement à une antenne d'amplification disposée dans le corps de l'objet et assurant la liaison radiofréquence avec l'antenne du lecteur.

D'autres caractéristiques et avantages de l'invention apparaîtront à la lecture de la description détaillée effectuée dans l'application de l'invention à une carte à puce, et des dessins annexés dans lesquels :
- la figure 1 représente une carte à puce sans contact connue, en vue en perspective éclatée ;
- la figure 2 représente un schéma de principe d'une carte à puce selon l'invention;
- la figure 3 représente une vue en coupe transversale d'un premier mode de réalisation d'une carte à puce selon l'invention;
- la figure 4 représente une vue en coupe transversale d'un second mode de réalisation d'une carte à puce selon l'invention;
- la figure 5 représente un organigramme du procédé de mise en œuvre d'une carte à puce selon l'invention.

### Description détaillée

On se réfère à la Figure 1, qui représente une vue en perspective éclatée d'une carte à puce connue 10 à fonctionnement mixte à contact et sans contact. Cette carte à puce comporte un premier module électronique 11 pourvu de contacts ISO 7816 normalisés, et un second module électronique 12, qui comporte notamment des capteurs biométriques tels que des capteurs d'empreintes digitales. Le premier module électronique comporte une puce microélectronique qui en particulier stocke de façon sécurisée des empreintes biométriques de référence du porteur de la carte. Afin d'autoriser une transaction avec la carte à puce, l'utilisateur doit soumettre son empreinte biométrique au second module électronique 12, et cette empreinte doit ensuite être transmise de façon sécurisée au premier module électronique 1. Il est donc nécessaire de mettre en place un canal de communication entre les premier et second modules 11, 12.

A cet effet, la carte à puce connue 10 comporte un circuit imprimé 13 (ou PCB pour "Printed Circuit Board" en terminologie anglo-saxonne) permettant d'établir un circuit complexe 14 entre les deux modules 11,12, réalisant aussi bien l'alimentation électrique du second module par le premier module, et la communication entre les deux modules. Ce circuit imprimé 13 doit être intégré entre des faces externes 15, 16 de la carte à puce, ce qui est plus compliqué et plus coûteux à réaliser que de simplement reporter un module électronique dans une cavité aménagée dans un corps de carte monolithique.

La figure 2 montre l'architecture d'un nouveau type de carte à puce 20 à plusieurs modules selon l'invention. Dans ce schéma, pour simplifier, on n'a pas représenté le corps de carte, mais uniquement les éléments fonctionnels que sont les modules électroniques et les antennes.

La carte à puce 20 comporte un premier module 21 ou module maître, un second module 22 ou module capteur, une antenne d'amplification 23 pour la communication avec un lecteur sans contact 24, et un canal de communication 25 entre les deux modules 21, 22.

Le premier module 21 comporte une puce microélectronique 26 qui est par exemple une puce sécurisée classique telle que celles couramment utilisées dans les cartes à puce, configurée pour traiter des informations sécurisées du porteur dans le cadre d'applications classiques de carte à puce telles que des applications bancaires, de contrôle d'accès physique ou logique, ou équivalent. La puce 26 est connectée à une inductance propre 27 qui est couplée électro magnétiquement avec une inductance propre 28 de l'antenne d'amplification 23.

Le premier module 21 comporte en outre un microcontrôleur 29 connecté d'une part à la puce 26 et d'autre part à un étage de communication optique comportant une diode d'émission LED 30 et une photodiode de réception 31.

La carte à puce 20 comporte en outre un second module électronique 22, comportant une puce microélectronique 32, qui peut varier en fonction des applications visées pour la carte à puce 20. Dans un mode de réalisation avantageux, il peut s'agir d'une puce associée à un capteur biométrique (non représenté) tel qu'un capteur d'empreintes digitales. La puce 33 est connectée à une inductance propre 33 qui est couplée électro magnétiquement avec une inductance propre 34 de l'antenne d'amplification 23.

De façon similaire au module 21, le module 22 comporte en outre un microcontrôleur 35 connecté d'une part à la puce 32 et d'autre part à un étage de communication optique comportant une diode LED d'émission 36 et une photodiode de réception 37. Bien entendu les deux modules 21, 22 sont disposés dans la carte à puce de manière que les étages optiques soient en regard pour définir un chemin optique 25 entre les deux modules 21, 22. En particulier, l'onde optique, par exemple la lumière émise par la LED 30 doit pouvoir être captée par la photodiode 37, et la lumière émise par la LED 36 doit pouvoir être captée par la photodiode 31. La communication optique se fait par tout protocole approprié, par exemple selon le protocole dit LIFI, et à toute longueur d'onde appropriée, par exemple dans le spectre de la lumière visible, mais pas nécessairement.

L'antenne d'amplification 23 comporte une inductance propre principale 38 de grande taille, proche du format dit ID1 de la carte à puce, permettant de communiquer avec un lecteur de carte à puce 24 situé à distance de la carte à puce.

Cet agencement permet, lors de l'utilisation de la carte à puce, de capter des données biométriques de l'utilisateur au moyen de capteurs biométriques associés à la puce 32, puis de transmettre les données biométriques du module 22 vers le module 21 via le canal de communication optique 25 qui traitera les données pour autoriser ou non une transaction avec la carte à puce.

Il est à noter que la carte à puce 20 peut comporter selon les besoins un seul module 22, ou plusieurs modules, tous connectés au module principal 21 par un canal optique totalement intégré à la carte à puce, de sorte que les données sensibles échangées entre les modules transitent à l'intérieur de la carte à puce sans pouvoir être captées par des dispositifs externes.

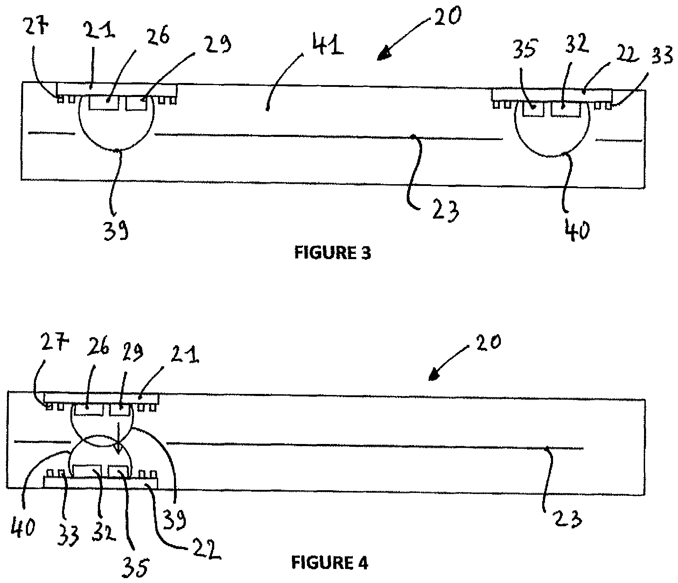

On se réfère maintenant aux figures 3 et 4 pour décrire des modalités pratiques de réalisation du canal de communication optique entre les différents modules de la carte à puce. Les figures sont schématiques et l'épaisseur de la carte à puce est exagérée pour plus de clarté.

En figure 3, deux modules 21, 22 sont intégrés du même côté de la carte à puce, par report et collage dans des cavités aménagées dans le corps de carte comme bien connu en soi. L'antenne d'amplification 23 est insérée entre des couches du corps de carte, et visible uniquement sur la tranche dans cette figure. Les références des composants sont celles de la figure 2. Le module 21 comporte une goutte 39 d'enrobage des composants 26, 29, 30, 31 du module, destinée à protéger ces composants. Le module 22 comporte de façon similaire une goutte d'enrobage 40 des composants 32, 35, 36, 37 du module.

Il est important que les gouttes d'enrobage 39, 40 soient réalisées en un matériau transparent à l'onde optique qui doit passer, par exemple la lumière visible, du moins à certaines longueurs d'ondes de celle-ci. Dans le mode de réalisation représenté, la carte à puce comporte en outre une couche 41 d'un matériau également optiquement transparent, cette couche 41 étant couplée optiquement avec les gouttes d'enrobage 39, 40, de façon qu'un signal optique émis par la LED de l'un des modules 21, 22 puisse être capté par la photodiode de l'autre module. De préférence, la couche transparente 41 ne débouche pas sur les bords de carte, de façon que le signal optique reste confiné à l'intérieur du corps de carte. A la place d'une simple couche optiquement transparente, le signal optique pourrait être transmis de module à module par l'intermédiaire d'une fibre optique.

En figure 4 on a représenté de façon schématique un autre mode de réalisation encore plus simple, dans lequel les deux modules sont disposés chacun sur une face de la carte à puce et en regard l'un de l'autre. Dans ce mode de réalisation, une couche de matériau optiquement transparent 41 est inutile, dans la mesure ou les gouttes d'enrobage 39, 40 sont disposées en face à face de manière à permettre une communication optique directe entre les deux modules 21, 22.

Bien entendu, dans le cas d'une carte à puce à trois modules ou plus, on pourra combiner les modes de réalisation des figures 3 et 4, certains modules étant disposés en regard et d'autres étant optiquement connectés par une couche transparente 41.

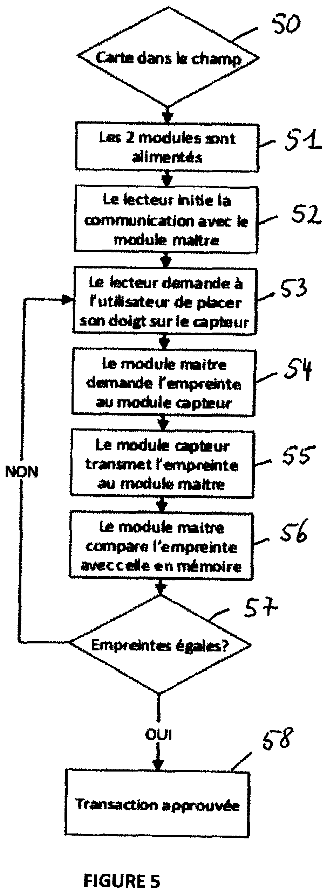

On décrit maintenant en référence à la figure 5, un exemple de cas d'usage de l'invention, dans lequel le module maitre 21 de l'objet portable communicant est un module de carte à puce, et le module esclave 22 est un module capteur d'empreintes digitales.

En 50, l'utilisateur place la carte à puce 20 dans le champ électromagnétique d'un lecteur sans contact d'un système d'identification de l'utilisateur. En conséquence, les inductances 28, 24 de la carte (figure 2) sont sous tension et comme elles sont couplées aux inductances 27, 33 des modules 21, 22, lesdits modules sont alimentés en énergie.

En 52, le lecteur 24 initie la communication radiofréquence avec le module maître 21. Lorsque la communication entre la carte 20 et le lecteur 24 est établie, le lecteur 24 affiche pour l'utilisateur une demande de placer un doigt sur le capteur d'empreintes de sa carte à puce. En 54, le module capteur 22 saisit l'empreinte digitale et le module maître 21 lui demande de lui communiquer l'empreinte digitale saisie. En 55, le module capteur 22 transmet l'empreinte digitale de l'utilisateur, via le canal optique 25 comme décrit plus haut. En 56, le module maître 21 compare l'empreinte digitale reçue du capteur d'empreinte 22, avec une empreinte de référence de l'utilisateur, préalablement stockée de manière sécurisée dans une mémoire du module maître 21. En 57, si les deux empreintes diffèrent, le lecteur lance une nouvelle opération de saisie et comparaison d'empreinte. Si les deux empreintes correspondent, l'utilisateur est identifié, et en 58 la transaction visée avec le module maître (accès physique ou logique) est autorisée.

Dans ce cas l'authentification de l'utilisateur est de type "match on card" selon la terminologie anglo-saxonne dédiée, c'est à dire qu'elle se passe à l'intérieur de la carte à puce, et l'utilisateur n'a pas à donner son empreinte à un lecteur tiers qui pourrait l'utiliser à son insu.

### Avantages de l'invention

En définitive, l'invention propose un objet portable communicant, notamment une carte à puce ou un passeport électronique, permettant d'atteindre les buts visés. En particulier, l'utilisation d'une communication optique entre modules élimine d'avoir recours à un circuit imprimé PCB, ce qui contribue à diminuer le coût de fabrication de la carte à puce et à augmenter le rendement de fabrication. En outre, la structure de la carte à puce selon l'invention est compatible avec les procédés de fabrication usuels à faible coût et haut rendement, consistant à intégrer des modules électroniques dans des cavités superficielles du corps de carte. Par ailleurs, il n'y a pas d'interférence possible entre la communication radiofréquence entre carte et lecteur, et la communication optique entre modules. La technologie proposée permet d'intégrer et de faire communiquer aisément plusieurs modules de types différents dans une carte à puce ou dans un dispositif communicant équivalent, sans nécessité de connexions filaires entre les modules, ce qui signifie que les dispositifs seront particulièrement résistants aux tests de fiabilité et présenteront une longue durée de vie. La communication optique entre modules fait que la solution proposée est particulièrement sûre et difficile à intercepter par un fraudeur potentiel.

## Revendications

1. - Document d'identification à puce (20) à fonctionnement sans contact ou à fonctionnement mixte à contact et sans contact, apte à communiquer par radiofréquence avec un lecteur externe (24), et comportant un corps dans lequel est intégrée au moins une antenne (23), un premier module électronique (21) pourvu d'une puce microélectronique (26), au moins un second module électronique (22) agencé pour pouvoir communiquer avec ledit premier module électronique (21), et un chemin optique (25) aménagé entre ledit premier module électronique (21) et ledit au moins un second module électronique (22), lesdits modules électroniques (21,22) étant physiquement séparés et répartis dans le corps du document d'identification (20) et comportant chacun une interface optique (30, 31 ; 36, 37), **caractérisé en ce que** chacun des modules électroniques (21, 22) comporte une goutte de résine d'enrobage (39, 40) configurée de manière à protéger lesdites interfaces optiques et réalisée en une matière optiquement transparente à au moins certaines longueurs d'onde de la lumière, et lesdites gouttes d'enrobage (39, 40) étant optiquement couplées à travers ledit chemin optique (25).

2. - Document d'identification selon la revendication 1, **caractérisé en ce que** ledit chemin optique (25) est constitué par une couche (41) en matériau optiquement transparent ou par une fibre optique.

3. - Document d'identification à puce (20) à fonctionnement sans contact ou à fonctionnement mixte à contact et sans contact, apte à communiquer par radiofréquence avec un lecteur externe (24), et comportant un corps dans lequel est intégrée au moins une antenne (23), un premier module électronique (21) pourvu d'une puce microélectronique (26) et un second module électronique (22) disposé en regard du premier module électronique (21), lesdits modules électroniques (21,22) comportant chacun une interface optique (30, 31; 36, 37),
**caractérisé en ce que** chacun des modules électroniques (21, 22) comporte une goutte de résine d'enrobage (39, 40) configurée de manière à protéger lesdites interfaces optiques et réalisée en une matière optiquement transparente à au moins certaines longueurs d'onde de la lumière, et **en ce que** les gouttes d'enrobage (39, 40) sont disposées en face à face de manière à permettre une communication optique directe entre les deux modules (21, 22).

4. - Document d'identification à puce (20) selon l'une quelconque des revendications précédentes, **caractérisé en ce que** ladite interface optique (30, 31 ; 36, 37) comporte pour chaque module (20, 21) une photodiode (30;36) et une LED d'émission (31;37), la photodiode d'une interface optique donnée étant optiquement couplée à la LED d'émission d'une autre interface optique.

5. - Document d'identification à puce (20) selon l'une des revendications 3 ou 4, **caractérisé en ce qu'**il comporte deux modules électroniques en regard l'un de l'autre de façon à présenter leurs interfaces optiques en face l'une de l'autre, et un troisième module optiquement connecté à au moins l'un des autres modules par une couche optique transparente (41).

6. - Document d'identification à puce (20) selon l'une quelconque des revendications précédentes, **caractérisé en ce qu'**au moins l'un des modules électroniques (20, 21) comporte un capteur biométrique.

7. - Document d'identification à puce (20) selon l'une quelconque des revendications précédentes, **caractérisé en ce que** chaque module électronique (20, 21) comporte une inductance propre (27, 33) apte à récupérer l'énergie du signal radiofréquence du lecteur (24) pour alimenter électriquement le module électronique (20,21).

8. - Document d'identification à puce (20) selon la revendication 7, **caractérisé en ce que** chaque inductance propre (27, 33) de module est couplée électro magnétiquement à une antenne d'amplification (23) disposée dans le corps de l'objet (20) et assurant la liaison radiofréquence avec l'antenne du lecteur (24).

9. - Document d'identification à puce (20) selon l'une quelconque des revendications précédentes, **caractérisé en ce qu'**il se présente sous la forme d'une carte à puce au format ISO 7816-1, ou au format d'un passeport électronique.

## Patentansprüche

1. Identifikationsdokument mit Chip (20) mit kontaktloser Funktionsweise oder mit gemischter Funktionsweise mit und ohne Kontakt, das geeignet ist, über Funk mit einem äußeren Lesegerät (24) zu kommunizieren, und das einen Körper, in den mindestens eine Antenne (23) integriert ist, ein mit einem Mikroelektronikchip (26) versehenes erstes Elektronikmodul (21), mindestens ein zweites Elektronikmodul (22), das ausgebildet ist, um mit dem ersten Elektronikmodul (21) kommunizieren zu können, und eine optische Weglänge (25) aufweist, die zwischen dem ersten Elektronikmodul (21) und dem mindestens einen zweiten Elektronikmodul (22) eingerichtet ist, wobei die Elektronikmodule (21, 22) physisch getrennt und im Körper des Identifikationsdokuments (20) verteilt sind und je eine optische Schnittstelle (30, 31; 36, 37) aufweisen, **dadurch gekennzeichnet, dass** jedes der Elektronikmodule (21, 22) einen Umhüllungsharztropfen (39, 40) aufweist, der so konfiguriert ist, dass er die optischen Schnittstellen schützt, und aus einem für mindestens bestimmte Wellenlängen des Lichts durchlässigen Stoff hergestellt ist, und die Umhüllungstropfen (39, 40) optisch über die optische Weglänge (25) gekoppelt sind.

2. Identifikationsdokument nach Anspruch 1, **dadurch gekennzeichnet, dass** die optische Weglänge (25) aus einer Schicht (41) aus optisch durchlässigem Stoff oder aus einer Glasfaser besteht.

3. Identifikationsdokument mit Chip (20) mit kontaktloser Funktionsweise oder mit gemischter Funktionsweise mit und ohne Kontakt, das geeignet ist, über Funk mit einem äußeren Lesegerät (24) zu kommunizieren, und das einen Körper, in den mindestens eine Antenne (23) integriert ist, ein mit einem Mikroelektronikchip (26) versehenes erstes Elektronikmodul (21) und ein zweites Elektronikmodul (22) aufweist, das gegenüber dem ersten Elektronikmodul (21) angeordnet ist, wobei die Elektronikmodule (21, 22) je eine optische Schnittstelle (30, 31; 36, 37) aufweisen, **dadurch gekennzeichnet, dass** jedes der Elektronikmodule (21, 22) einen Umhüllungsharztropfen (39, 40) aufweist, der so konfiguriert ist, dass er die optischen Schnittstellen schützt, und aus einem für mindestens bestimmte Wellenlängen des Lichts durchlässigen Stoff hergestellt ist, und dass die Umhüllungstropfen (39, 40) einander gegenüber angeordnet sind, um eine direkte optische Kommunikation zwischen den zwei Modulen (21, 22) zu ermöglichen.

4. Identifikationsdokument mit Chip (20) nach einem der vorhergehenden Ansprüche, **dadurch gekennzeichnet, dass** die optische Schnittstelle (30, 31; 36, 37) für jedes Modul (20, 21) eine Photodiode (30; 36) und eine Emissions-LED (31; 37) aufweist, wobei die Photodiode einer gegebenen optischen Schnittstelle optisch mit der Emissions-LED einer anderen optischen Schnittstelle gekoppelt ist.

5. Identifikationsdokument mit Chip (20) nach einem der Ansprüche 3 oder 4, **dadurch gekennzeichnet, dass** es zwei Elektronikmodule, die einander gegenüberliegen, um ihre optischen Schnittstellen einander gegenüber zu präsentieren, und ein drittes Modul aufweist, das optisch mit mindestens einem der anderen Module durch eine durchlässige optische Schicht (41) verbunden ist.

6. Identifikationsdokument mit Chip (20) nach einem der vorhergehenden Ansprüche, **dadurch gekennzeichnet, dass** mindestens eines der Elektronikmodule (20, 21) einen biometrischen Sensor aufweist.

7. Identifikationsdokument mit Chip (20) nach einem der vorhergehenden Ansprüche, **dadurch gekennzeichnet, dass** jedes Elektronikmodul (20, 21) eine Eigeninduktivität (27, 33) aufweist, die geeignet ist, die Energie des Funksignals des Lesegeräts (24) wiederzugewinnen, um das Elektronikmodul (20, 21) mit Strom zu versorgen.

8. Identifikationsdokument mit Chip (20) nach Anspruch 7, **dadurch gekennzeichnet, dass** jede Eigeninduktivität (27, 33) eines Moduls elektromagnetisch mit einer Verstärkungsantenne (23) gekoppelt ist, die im Körper des Objekts (20) angeordnet ist und die Funkverbindung mit der Antenne des Lesegeräts (24) gewährleistet.

9. Identifikationsdokument mit Chip (20) nach einem der vorhergehenden Ansprüche, **dadurch gekennzeichnet, dass** es in Form einer Chipkarte im Format ISO 7816-1, oder im Format eines elektronischen Reisepasses vorliegt.

## Claims

1. Identification document (20) having a contactless chip or mixed-operation contact-based and contactless chip, able to communicate by radiofrequency with an external reader (24), and comprising a body into which is integrated at least one antenna (23), a first electronic module (21) provided with a microelectronic chip (26), at least one second electronic module (22) designed to be able to communicate with said first electronic module (21), and an optical path (25) arranged between said first electronic module (21) and said at least one second electronic module (22), said electronic modules (21, 22) being physically separated and spaced apart in the body of the identification document (20) and each comprising an optical interface (30, 31; 36, 37), **characterized in that** each of the electronic modules (21, 22) comprises a droplet of coating resin (39, 40) configured so as to protect said optical interfaces and made of a material which is optically transparent to at least certain wavelengths of light, and said coating droplets (39, 40) being optically coupled across said optical path (25).

2. Identification document according to Claim 1, **characterized in that** said optical path (25) is formed by a layer (41) of optically transparent material or by an optical fibre.

3. Identification document (20) having a contactless chip or mixed-operation contact-based and contactless chip, able to communicate by radiofrequency with an external reader (24), and comprising a body into which is integrated at least one antenna (23), a first electronic module (21) provided with a microelectronic chip (26) and a second electronic module (22) disposed facing the first electronic module (21), said electronic modules (21, 22) each comprising an optical interface (30, 31; 36, 37), **characterized in that** each of the electronic modules (21, 22) comprises a droplet of coating resin (39, 40) configured so as to protect said optical interfaces and made of a material which is optically transparent to at least certain wavelengths of light, and **in that** the coating droplets (39, 40) are disposed face-to-face so as to allow direct optical communication between the two modules (21, 22).

4. Identification document (20) having a chip according to any one of the preceding claims, **characterized in that** said optical interface (30, 31; 36, 37) comprises for each module (20, 21) a photodiode (30; 36) and an emission LED (31; 37), the photodiode of a given optical interface being optically coupled to the emission LED of another optical interface.

5. Identification document (20) having a chip according to either of Claims 3 and 4, **characterized in that** it comprises two electronic modules facing each other so as to have their optical interfaces facing each other, and a third module which is optically connected to at least one of the other modules by way of a transparent optical layer (41).

6. Identification document (20) having a chip according to any one of the preceding claims, **characterized in that** at least one of the electronic modules (20, 21) comprises a biometric sensor.

7. Identification document (20) having a chip according to any one of the preceding claims, **characterized in that** each electronic module (20, 21) comprises a specific inductor (27, 33) able to recover the energy of the radiofrequency signal from the reader (24) in order to electrically power the electronic module (20, 21).

8. Identification document (20) having a chip according to Claim 7, **characterized in that** each specific inductor (27, 33) of a module is electromagnetically coupled to an amplification antenna (23) disposed in the body of the object (20) and ensuring the radiofrequency link with the antenna of the reader (24) .

9. Identification document (20) having a chip according to any one of the preceding claims, **characterized in that** it is in the form of a chip card in the ISO 7816-1 format, or in the format of an electronic passport.
